# EUROPÄISCHE PATENTSCHRIFT

(11) **EP 3 463 936 B1**
(45) Veröffentlichungstag und Bekanntmachung des Hinweises auf die Patenterteilung: **29.04.2020**
(21) Anmeldenummer: 17713258.6
(22) Anmeldetag: 23.03.2017
(51) Int. Cl.: B60C 25/05

(54) **REIFENMONTIERMASCHINE UND VERFAHREN FÜR DIE BESCHICHTUNG EINER OBERFLÄCHE EINES REIFENTELLERS**
TYRE MOUNTING MASCHINE AND PROCESS FOR COATING A SURFACE OF A TURNTABLE
MACHINE DE MONTAGE DE PNEUMATIQUES ET PROCEDE POUR LE REVETEMENT D'UNE SURFACE D'UN PLATEAU TOURNANT

(30) Priorität: 23.05.2016 DE 102016208855
(43) Veröffentlichungstag der Anmeldung: 10.04.2019
(73) Patentinhaber: Beissbarth GmbH, 80993 München (DE)
(72) Erfinder: MACCHIA, Adriano, 42015 Correggio (IT); SAMANNI, Emilio, 42015 Correggio (IT)
(74) Vertreter: Schmitt-Nilson Schraud Waibel Wohlfrom Patentanwälte Partnerschaft mbB
(86) Internationale Anmeldenummer: PCT/EP2017/056950
(87) Internationale Veröffentlichungsnummer: WO 2017/202523

(56) Entgegenhaltungen:
- EP-A1- 2 218 591
- Twin Busch Gmbh Garage Equipment - Werkstattausrüstung: "SEMI AUTOM. Reifenmontagemaschine Multitalent - TW1236-0 preiswert von Twin-Shop Werkstattausrüstung - Twin Busch GmbH - GARAGE EQUIPMENT", , 24. April 2016 (2016-04-24), XP055374797, Gefunden im Internet: URL:https://web.archive.org/web/2016042417 0807/http:/www.twinbusch.de/product_info.p hp?products_id=24 [gefunden am 2017-05-22]
- Anonymous: "Pulverbeschichten - Wikipedia", , 30. Mai 2015 (2015-05-30), XP055375129, Gefunden im Internet: URL:https://web.archive.org/web/2015053001 3610/https://de.wikipedia.org/wiki/Pulverb eschichten [gefunden am 2017-05-22]
- Good Lack: "Duplex-Beschichtung - Good Lack Pulverbeschichtung", , 1. Mai 2016 (2016-05-01), XP055375140, Gefunden im Internet: URL:https://web.archive.org/web/2016050120 3001/http://www.goodlack.at/duplexbeschich tung.php [gefunden am 2017-05-22]

## Beschreibung

Die Erfindung betrifft eine Reifenmontiermaschine und ein Verfahren für die Beschichtung einer Oberfläche eines Reifentellers nach dem Oberbegriff der unabhängigen Ansprüche 1 und 6.

### Stand der Technik

Aus der WO 2015/044920 A ist eine Reifenmontiermaschine mit einem Reifenteller bekannt, eine Reifendemontiermaschine ist in der Schrift EP0767098 beschrieben. Der Reifenteller ist ein wesentliches Merkmal einer Reifenmontiermaschine oder Reifendemontiermaschine, da er zur Aufnahme und zum Befestigen des Rades auf der Maschine dient, während der Reifen gewechselt wird. Der Reifenteller ist in der Werkstatt extremen Anforderungen ausgesetzt, da er ständig mit Chemikalien aus der Werkstatt oder mit Salzwasser von den Rädern in Kontakt kommt. Momentan werden die meisten Reifenteller elektrolytisch verzinkt, um sie vor Korrosion zu schützen.

Eine Reifenmontagemaschine mit einer Pulverbeschichtung ist auch aus https://web.archive.org/web/20160424170807/http://www.twinbusch.de/product_in fo.php?products_id=24 [gefunden am 2017-05-22] bekannt.

### Offenbarung der Erfindung

Die erfindungsgemäße Reifenmontiermaschine und das Verfahren für die Beschichtung einer Oberfläche eines Reifentellers mit den Merkmalen gemäß der unabhängigen Ansprüche haben den Vorteil, dass der Reifenteller gut vor Korrosion geschützt ist und durch eine geringere Oberflächenrauigkeit im Vergleich zu einem Reifenteller der elektrolytisch verzinkt ist, besser zu reinigen ist. Die geringere Oberflächenrauigkeit ermöglicht es schneller und einfacher von Verschmutzungen vom Reifenteller zu entfernen. Des Weiteren wird ein geringerer Kraftaufwand für das Verschieben oder Justieren eines Rades auf dem Reifenteller benötigt, so dass die Handhabung der gesamten Reifenmontiermaschine für einen Anwender einfacher wird.

In den abhängigen Ansprüchen sind vorteilhafte Ausgestaltungen und Weiterbildungen der erfindungsgemäßen Vorrichtung und des erfindungsgemäßen Verfahrens angegeben.

Es ist von Vorteil, wenn der Reifenteller eine Untergrundschicht aufweist, welche aufgeraut ist, da die Pulverbeschichtung, welche auf der Untergrundschicht aufgebracht ist, besser hält. Ein aufgerauter Untergrund, welcher durch Sandstrahlung erzeugt wurde, ist gut gereinigt, so dass zwischen dem ursprünglichen Material des Reifentellers und der Pulverbeschichtung keine Verschmutzungen vorhanden sind, welche die Haftung beeinflussen. Durch einen aufgerauten Untergrund wird die Haltbarkeit der Beschichtung verbessert.

Es ist besonders vorteilhaft, wenn die Pulverbeschichtung den gesamten Reifenteller umschließt, da auf diese Weise keine Angriffsfläche für Korrosion gegeben ist. Es ist aber auch möglich, dass nur Teilbereiche des Reifentellers mit der Pulverbeschichtung geschützt werden.

Eine Pulverbeschichtung mit einer geringen Wasserdurchlässigkeit und einen Zinkkomplex verhindert Korrosion.

Es ist von Vorteil, wenn die Oberfläche zu Beginn durch alkalische Reinigungsmittel gereinigt wird, da dies sicherstellt, dass ungewollte Verunreinigungen vor dem Auftrag der Pulverbeschichtung entfernt sind und somit die Haltbarkeit der Pulverbeschichtung erhöht wird.

Durch das Entfernen von losen Partikeln auf der Oberfläche durch Luftstrahlen vor dem Auftragen der Pulverbeschichtung wird die Haltbarkeit der Pulverbeschichtung erhöht. Ein Entfernen von losen Partikeln durch Luftstrahlen ist ein Verfahrensschritt der sich durch leichte Veränderungen an die Bearbeitung der Oberfläche mit Druckluftstrahlen anschließen lässt.

### Ausführungsbeispiele

Bevorzugte Ausführungsbeispiele der Erfindung sind in der Zeichnung dargestellt und in der nachfolgenden Beschreibung näher erläutert.

Es zeigen:
- Figur 1: eine schematische Darstellung einer Reifenmontiermaschine,
- Figur 2: einen Reifenteller,
- Figur 3: eine elektrolytisch verzinkte Reifentelleroberfläche im Querschnitt,
- Figur 4: eine pulverbeschichtetet Reifentelleroberfläche im Querschnitt und
- Figur 5: ein Ablaufdiagramm eines erfindungsgemäßen Verfahrens.

### Ausführungsformen der Erfindung

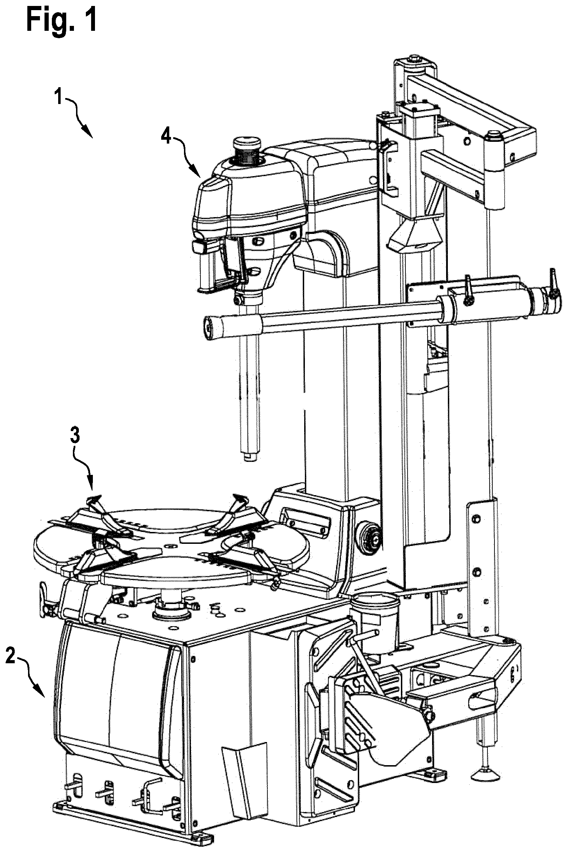

Die schematische Ansicht gemäß Figur 1 zeigt eine Reifenmontiermaschine 1, welche zum montieren oder demontieren eines Reifens auf eine Felge dient. Die Reifenmontiermaschine 1 weist einen Basisrahmen 2 auf, welcher auf den Boden stehen kann. Der Basisrahmen 2 ist mit einem Reifenteller 3 verbunden. Der Reifenteller 3 ist rotierbar und dient zur Aufnahme der Felge und/oder des Reifens.

Die Reifenmontiermaschine 1 weist auch einen Hauptarm 4 auf, welcher an dem Basisrahmen 2 befestigt ist und zum Befestigen (Montieren) und zum Lösen (Demontieren) des Reifens der Felge dient. Auf weitere Details zur Funktionsweise einer Reifenmontiermaschine 1 soll hier im Weiteren nicht eingegangen werden. Der Aufbau einer Reifenmontiermaschine 1 und deren Funktionsweise ist einem Werkstattmechaniker bekannt und wird unter anderem in der Schrift WO 2015/044920 A beschrieben. Wesentliches Merkmal der Reifenmontiermaschine 1 ist der Reifenteller 3, welcher zur Aufnahme der Felge mit oder ohne montiertem Reifen dient.

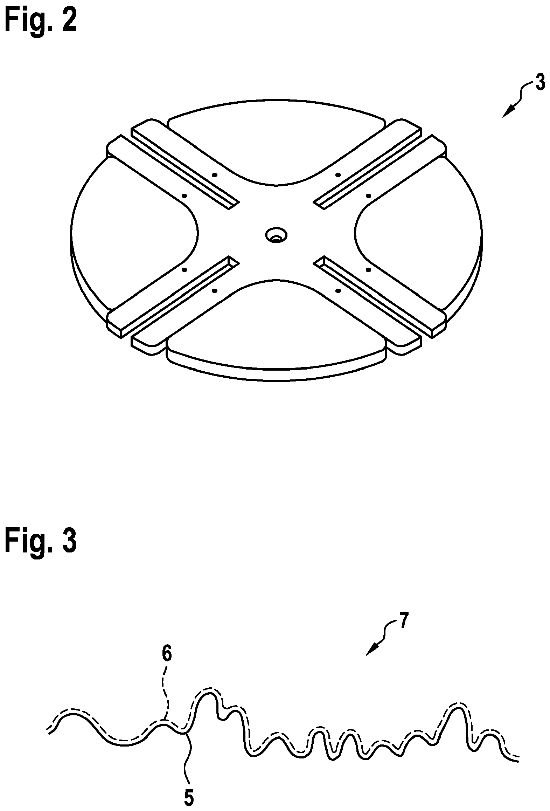

Im allgemeinen ist der Reifenteller 3 auf einer Vorderseite des Basisrahmens 2 befestigt. Im dargestellten Ausführungsbeispiel ist der Reifenteller 3 rund. Der Reifenteller 3 kann aber auch eine andere Form haben. Der Reifenteller 3 weist eine flache Oberfläche auf mit Befestigungsmitteln, wie zum Beispiel Klammern, um die Felge auf den Reifenteller 3 zu befestigen. In Figur 2 ist der Reifenteller 3 ohne Befestigungsmittel dargestellt.

Der Reifenteller 3 ist in der Werkstatt extremen Anforderungen ausgesetzt, da er ständig im Kontakt mit Chemikalien aus der Werkstatt oder mit Salzwasser von den Rädern in Kontakt kommt. Des Weiteren wirken auf den Reifenteller 3 große Reibungskräfte, wenn das Rad oder die Felge auf den Reifenteller 3 gelegt werden oder dort zur korrekten Justierung hin- und hergeschoben werden. Unter dem Begriff Rad wird im Rahmen der Anmeldung eine Felge mit montiertem Reifen verstanden.

Um den Reifenteller 3 vor Korrosion zu schützen, kommen bisher folgende Möglichkeiten zum Einsatz. Der Reifenteller 3 kann durch einen Ölauftrag oder einen Ölfilm vor Schmutzwasser und Chemikalien geschützt werden. Der Ölauftrag reduziert auch die Oberflächenrauigkeit und ermöglicht ein leichteres Gleiten des Rades auf dem Reifenteller 3. Diese Möglichkeit ist aber nachteilig, da der Ölfilm im Laufe der Zeit vom Reifenteller 3 verschwindet und immer wieder erneuert werden muss.

Eine weitere Möglichkeit besteht in der Verwendung von Metallen für den Reifenteller 3, welche nicht korrodieren, wie beispielsweise nichtrostender Stahl. Diese Möglichkeit wird aufgrund hoher Herstellungskosten selten angewendet.

Eine dritte Möglichkeit besteht darin, den Reifenteller 3 elektrolytisch zu verzinken. Diese Methode wird momentan in der Praxis am meisten eingesetzt, da sie gegenüber dem Ölauftrag eine höherer Haltbarkeit aufweist.

In Figur 3 ist eine elektrolytisch verzinkte Reifentelleroberfläche 7 im Querschnitt dargestellt. Um eine Oberfläche elektrolytisch zu verzinken, muss diese erst mit Sandstrahlung bearbeitet werden. Die Sandstrahlung führt zu einer rauhen Untergrundschicht 5, wie in Figur 3 in starker Vergrößerung dargestellt. Die Untergrundschicht 5 weist eine hohe Rauhigkeit auf, welche in Form von unterschiedlich tiefen Tälern und Erhebungen dargestellt ist. Durch das elektrolytische Verzinken wird eine dünne Schutzschicht 6 mit annährend gleicher Dicke gleichmäßig auf die Untergrundschicht 5 aufgebracht. Die Täler und Erhebungen sind auch nach dem elektrolytischen Verzinken noch vorhanden, so dass die elektrolytisch verzinkte Reifentelleroberfläche 7 auch eine hohe Rauhigkeit aufweist.

Durch die hohe Rauhigkeit lässt sich die elektrolytisch verzinkte Reifentelleroberfläche 7 nur schwer reinigen. Dadurch kann bei starker Verschmutzung die Beweglichkeit der Klemmen auf dem Reifenteller 8 eingeschränkt werden.

Ein weitere Nachteil besteht durch Chemikalien, die vor dem elektrolytischen Verzinken auf den Reifenteller 3 aufgebracht werden müssen und nicht vollständig entfernt wurden, da diese zu einer Zerstörung des Reifentellers 3 führen können.

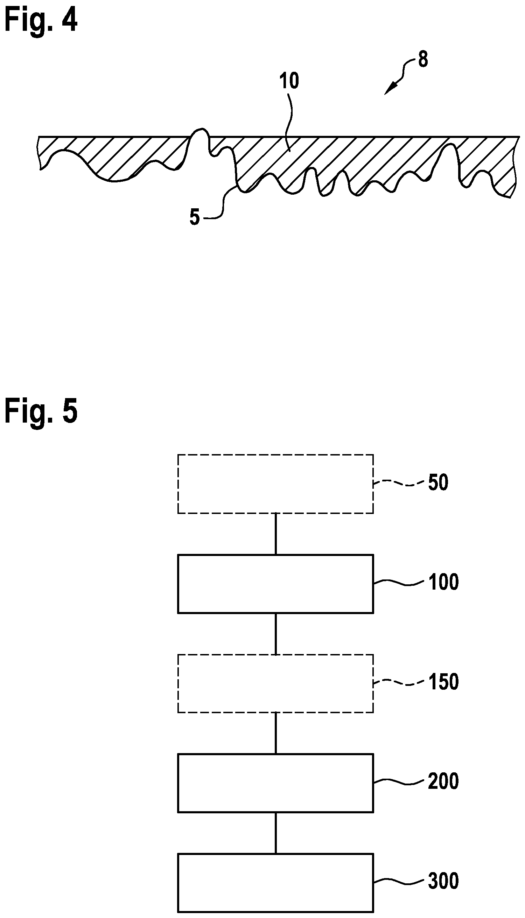

Aus diesem Grund wird gemäß der vorliegenden Erfindung vorgeschlagen, den Reifenteller 3 durch eine Pulverbeschichtung 10 vor Korrosion zu schützen. In Figur 4 ist eine pulverbeschichtete Reifentelleroberfläche 8 im Querschnitt dargestellt. Hierbei handelt es sich auch um einen stark vergrößerten Ausschnitt der pulverbeschichteten Reifentelleroberfläche 8. Der Reifenteller 3 weist eine Untergrundschicht 5 mit hoher Rauigkeit auf. Die aufgeraute Unterschicht 5 kann aufgrund der vorhandenen Materialeigenschaften des Reifenteller 3 vorhanden sein oder durch eine Oberflächenbehandlung des Reifenteller 3, beispielsweise durch Sandstrahlen, entstanden sein.

Die Pulverbeschichtung 10 ist auf der Untergrundschicht 5 aufgebracht. Durch die Pulverbeschichtung 10 werden Täler und Erhebungen der Untergrundschicht 5 ausgeglichen bzw. geglättet, so dass durch die Pulverbeschichtung 8 der Reifenteller 3 eine geringere Rauigkeit aufweist als vor dem Auftragen der Pulverbeschichtung 10. Der Reifenteller 3 lässt sich aufgrund der geringeren Rauigkeit besser reinigen und es setzen sich weniger Schmutzpartikel auf der Oberfläche ab. Durch eine Pulverbeschichtung 10, welche den gesamten Reifenteller 3 bzw. die gesamte Oberfläche des Reifentellers 3, umschließt, kann der Reifenteller 3 effektiv vor Korrosion geschützt werden und lässt sich leichter reinigen.

In Figur 5 ist ein Ablaufdiagramm eines erfindungsgemäßen Verfahrens dargestellt, um die Oberfläche eines Reifentellers 3 einer Reifenmontiermaschine 1 zu beschichten.

Im Verfahrensschritt 100 wird die Oberfläche des Reifentellers 3 mit Druckluftstrahlen mit festen Strahlmitteln bearbeitet. Wird dieser Verfahrensschritt mit Sand als Strahlmittel angewandt, so ist er als Sandstrahlen bekannt. Durch die Einwirkung des Strahlmittels/Sandes können von der Oberfläche des Reifentellers 3 arteigene oder artfremde Verunreinigungen (fest oder lose) entfernen werden und/oder die Oberfläche des Reifentellers 3 aufgeraut werden. Der Sand wirkt beispielsweise auch als Schleifmittel gegen Rost, so dass die Oberfläche des Reifenstellers 3 aufgeraut wird und die Untergrundschicht 5 entsteht.

Im Verfahrensschritt 200 wird die Pulverbeschichtung 10 aufgetragen. Um einen Schutz gegen Korrosion zu erreichen wird eine Pulverlack genutzt, welcher eine geringe Wasserdurchlässigkeit aufweist und durch einen Zinkkomplex Korrosion verhindert. Hierbei wird bevorzugt das Produkt Zn RICH PRIMER® 13A0/2649 von Pulverit eingesetzt. Die Pulverbeschichtung 10 kann elektrostatisch aufgesprüht werden.

Im Verfahrensschritt 300 wird die Pulverbeschichtung 10 durch Erhitzen gehärtet. Dies erfolgt für das Produkt Zn RICH PRIMER® 13A0/2649 von Pulverit bei 180 Grad.

Optionale Verfahrensschritte, welche das Ergebnis der Beschichtung verbessern, aber nicht obligatorisch sind, sind durch gestrichelte Kästen im Flussablaufdiagramm dargestellt.

Im optionalen Verfahrensschritt 50 wird zu Beginn des Verfahrens die Oberfläche des Reifentellers 3 durch alkalische Reinigungsmittel gereinigt.

Im optionalen Verfahrensschritt 150, welcher zwischen dem Verfahrensschritt 100 und dem Verfahrensschritt 200 zum Einsatz kommen kann, wird die Oberfläche des Reifentellers 3 durch Luftstrahlen von losen Partikeln befreit. Durch das Bestrahlen des Reifentellers 3 mit Luft, können Reste des Strahlmittels (beispielsweise Sand) von der Oberfläche entfernt werden.

## Patentansprüche

1. Reifenmontiermaschine (1) zum Montieren und/oder Demontieren eines Reifens auf eine Felge mit einem rotierbaren Reifenteller (3), der zur Aufnahme einer Felge mit oder ohne montierten Reifen ausgebildet ist, **dadurch gekennzeichnet, dass** der Reifenteller (3) eine Pulverbeschichtung (10) aufweist.

2. Reifenmontiermaschine (1) nach Anspruch 1, **dadurch gekennzeichnet, dass** der Reifenteller (3) eine Untergrundschicht (5) aufweist, welche aufgeraut ist.

3. Reifenmontiermaschine (1) nach Anspruch 2, **dadurch gekennzeichnet, dass** die Pulverbeschichtung (10) auf der Untergrundschicht (5) aufgebracht ist.

4. Reifenmontiermaschine (1) nach einem der Ansprüche 1 oder 3, **dadurch gekennzeichnet, dass** die Pulverbeschichtung (10) den gesamten Reifenteller (3) umschließt.

5. Reifenmontiermaschine (1) nach einem der vorherigen Ansprüche, **dadurch gekennzeichnet, dass** die Pulverbeschichtung eine geringe Wasserdurchlässigkeit aufweist und durch einen Zinkkomplex Korrosion verhindert.

6. Verfahren für die Beschichtung einer Oberfläche eines rotierbaren Reifentellers (3) einer Reifenmontiermaschine (1), der zur Aufnahme einer Felge mit oder ohne montierten Reifen ausgebildet ist, mit den folgenden Schritten:
- Bearbeitung der Oberfläche des Reifentellers (3) mit Druckluftstrahlen mit festen Strahlmittel, insbesondere Sand;
- Auftragen einer Pulverbeschichtung; und
- Härten der Pulverbeschichtung durch Erhitzen

7. Verfahren nach Anspruch 6, **dadurch gekennzeichnet, dass** die Pulverbeschichtung elektrostatisch aufgesprüht wird.

8. Verfahren nach einem der vorherigen Ansprüche, **dadurch gekennzeichnet, dass** die Oberfläche zu Beginn durch alkalische Reinigungsmittel gereinigt wird.

9. Verfahren nach Anspruch 6, **dadurch gekennzeichnet, dass** vor dem Auftragen der Pulverbeschichtung durch Luftstrahlen die Oberfläche von losen Partikeln befreit wird.

10. Verfahren nach einem der vorherigen Ansprüche, **dadurch gekennzeichnet, dass** die Pulverbeschichtung eine geringe Wasserdurchlässigkeit aufweist und durch einen Zinkkomplex Korrosion verhindert.

## Claims

1. A tire changer (1) for mounting a tire on a rim and/or for dismounting it therefrom, comprising a tire turntable (3) configured to receive a rim with or without a tire mounted,
**characterized in that** the tire turntable (3) has a powder coating (10).

2. A tire changer (1) according to claim 1,
**characterized in that** the tire turntable (3) has a base layer (5) which is roughened.

3. A tire changer (1) according to claim 2,
**characterized in that** the powder coating (10) is applied to the base layer (5).

4. A tire changer (1) according to any of claims 1 or 3,
**characterized in that** the powder coating (10) encloses the entire tire turntable (3).

5. A tire changer (1) according to any of the preceding claims,
**characterized in that** the powder coating has a low water permeability and prevents corrosion by a zinc complex.

6. A method for coating a surface of a tire turntable (3) of a tire changer (1), which is configured to receive a rim with or without a tire mounted, said method comprising the steps of:
- processing the surface of the tire turntable (3) with compressed air jets with solid blasting media, in particular sand;
- applying a powder coating; and
- hardening the powder coating by heating.

7. A method according to claim 6,
**characterized in that** the powder coating is sprayed on electrostatically.

8. A method according to any of the preceding claims,
**characterized in that** the surface is initially cleaned by alkaline cleaning agents.

9. A method according to claim 6,
**characterized in that**, before applying the powder coating, the surface is freed from loose particles by air jets.

10. A method according to any of the preceding claims,
**characterized in that** the powder coating has a low water permeability and prevents corrosion by a zinc complex.

## Revendications

1. Machine de montage de pneumatiques (1) pour le montage et/ou le démontage d'un pneumatique sur une jante avec un plateau tournant (3) réalisé de manière à recevoir une jante avec ou sans pneumatique monté, **caractérisée en ce que** le plateau (3) présente un revêtement en poudre (10).

2. Machine de montage de pneumatiques (1) selon la revendication 1, **caractérisée en ce que** le plateau (3) présente une couche de base (5) rendue rugueuse.

3. Machine de montage de pneumatiques (1) selon la revendication 2, **caractérisée en ce que** le revêtement en poudre (10) est appliqué sur la couche de base (5).

4. Machine de montage de pneumatiques (1) selon l'une quelconque des revendications 1 ou 3, **caractérisée en ce que** le revêtement en poudre (10) couvre l'ensemble du plateau (3).

5. Machine de montage de pneumatiques (1) selon l'une quelconque des revendications précédentes, **caractérisée en ce que** le revêtement en poudre présente une faible perméabilité à l'eau et empêche la corrosion grâce à un complexe de zinc.

6. Procédé pour le revêtement d'une surface d'un plateau tournant (3) d'une machine de montage de pneumatiques (1), destiné à accueillir une jante avec ou sans pneumatique monté, comprenant les étapes suivantes :
- traitement de la surface du plateau (3) au moyen de jets d'air comprimé comportant un agent de grenaillage solide, en particulier du sable ;
- application d'un revêtement en poudre ; et
- durcissement du revêtement en poudre par chauffage.

7. Procédé selon la revendication 6, **caractérisé en ce que** le revêtement en poudre est pulvérisé de manière électrostatique.

8. Procédé selon l'une quelconque des revendications précédentes, **caractérisé en ce que** la surface est nettoyée au départ au moyen d'un agent nettoyant alcalin.

9. Procédé selon la revendication 6, **caractérisé en ce que**, avant l'application du revêtement en poudre, la surface est libérée de particules libres par grenaillage à l'air comprimé.

10. Procédé selon l'une quelconque des revendications précédentes, **caractérisé en ce que** le revêtement en poudre présente une faible perméabilité à l'eau et empêche la corrosion grâce à un complexe de zinc.
